# EUROPÄISCHE PATENTSCHRIFT

(11) **EP 3 363 164 B1**
(45) Veröffentlichungstag und Bekanntmachung des Hinweises auf die Patenterteilung: **10.07.2019**
(21) Anmeldenummer: 16778833.0
(22) Anmeldetag: 10.10.2016
(51) Int. Cl.: H04L 12/40, H04L 29/06

(54) **VERFAHREN UND VORRICHTUNG ZUM ABWEHREN EINER MANIPULATION AN EINEM CAN-BUS DURCH EINEN MITTELS EINES CAN-CONTROLLERS AN DEN BUS ANGEBUNDENEN KNOTEN**
METHOD AND DEVICE FOR AVERTING A MANIPULATION OF A CAN BUS USING A NODE CONNECTED TO THE BUS BY MEANS OF A CAN CONTROLLER
PROCÉDÉ ET DISPOSITIF PERMETTANT À UN NOEUD, RELIÉ À UN BUS CAN PAR L'INTERMÉDIAIRE D'UN CONTRÔLEUR CAN, DE STOPPER UNE MANIPULATION AU NIVEAU DE CE BUS

(30) Priorität: 15.10.2015 DE 102015219996
(43) Veröffentlichungstag der Anmeldung: 22.08.2018
(73) Patentinhaber: Robert Bosch GmbH, 70442 Stuttgart (DE)
(72) Erfinder: HARTWICH, Florian, 72762 Reutlingen (DE); LOTHSPEICH, Timo, 71287 Weissach (DE); SOENKENS, Andreas, 71686 Remseck Am Neckar (DE); KELLER, Thomas, 78628 Rottweil (DE); MUTTER, Arthur, 73765 Neuhausen (DE)
(86) Internationale Anmeldenummer: PCT/EP2016/074214
(87) Internationale Veröffentlichungsnummer: WO 2017/064001

(56) Entgegenhaltungen:
- TSUTOMU MATSUMOTO ET AL: "A Method of Preventing Unauthorized Data Transmission in Controller Area Network", 2012 IEEE 75TH VEHICULAR TECHNOLOGY CONFERENCE (VTC SPRING 2012) : YOKOHAMA, JAPAN, 6 - 9 MAY 2012, IEEE, PISCATAWAY, NJ, 6. Mai 2012 (2012-05-06), Seiten 1-5, XP032202711, DOI: 10.1109/VETECS.2012.6240294 ISBN: 978-1-4673-0989-9
- MICHAEL MUTER ET AL: "Entropy-based anomaly detection for in-vehicle networks", INTELLIGENT VEHICLES SYMPOSIUM (IV), 2011 IEEE, IEEE, 5. Juni 2011 (2011-06-05), Seiten 1110-1115, XP031999062, DOI: 10.1109/IVS.2011.5940552 ISBN: 978-1-4577-0890-9

## Beschreibung

Die vorliegende Erfindung betrifft ein Verfahren zum Abwehren einer Manipulation an einem CAN-Bus durch einen mittels eines CAN-Controllers an den Bus angebundenen Knoten. Die vorliegende Erfindung betrifft darüber hinaus eine entsprechende Vorrichtung, ein entsprechendes Computerprogramm sowie ein entsprechendes Speichermedium.

### Stand der Technik

Nach dem Stand der Technik besteht ein CAN-Kommunikationsnetzwerk aus mindestens zwei Teilnehmern, die über die CAN-Verbindung Botschaften nach der CAN-Spezifikation austauschen können. Jeder Bus-Teilnehmer kann entsprechend Botschaften versenden und empfangen. Um Kommunikationsprobleme zu vermeiden, werden zum Zeitpunkt des Netzwerkdesigns den jeweiligen Bus-Teilnehmern eindeutige Botschaftskennungen (*object identifier,* ID) zugeordnet. Empfängerseitig prüft die CAN-Hardware, ob die übermittelten Botschaften der CAN-Spezifikation entsprechen und kann im Falle von Übertragungsfehlern die Botschaft verwerfen. Die inhaltliche Prüfung einer gültigen Botschaft obliegt der Anwendungssoftware.

TSUTOMU MATSUMOTO ET AL: "A Method of Preventing Unauthorized Data Transmission in Controller Area Network", 2012 IEEE 75TH VEHICULAR TECHNOLOGY CONFERENCE (VTC SPRING 2012): YOKOHAMA, JAPAN, 6 - 9 MAY 2012, IEEE, PISCATAWAY, NJ, 6. Mai 2012 (2012-05-06), Seiten 1-5, XP032202711, auf dem der Oberbegriff des Anspruchs 1 basiert, offenbart ein Verfahren zum Abwehren einer Manipulation an einem CAN-Bus durch einen mittels eines CAN-Controllers an den Bus angebundenen ersten Knoten, beschrieben durch folgende Merkmale: Ein abgesichertes Sendemodul des ersten Knotens überwacht den Bus; das Sendemodul erkennt eine abweichend von dem Normalbetrieb unzulässiger Weise auf dem Bus gesendete Botschaft; und falls das Sendemodul die Botschaft erkennt, leitet das Sendemodul gegen die Manipulation vorgesehene Gegenmaßnahmen ein.

MICHAEL MUTER ET AL: "Entropy-based anomaly detection for in-vehicle networks", INTELLIGENT VEHICLES SYMPOSIUM (IV), 2011 IEEE, IEEE, 5. Juni 2011 (2011-06-05), Seiten 1110-1115, XP031999062, untersucht die Anwendbarkeit von Entropie-basierter Angriffserkennung für Fahrzeug-Netzwerke und illustriert die entscheidenden Aspekte für die Anpassung eines solchen Ansatzes an die automobile Domäne.

In US 8,799,520 B2 wird ein Verfahren zum Betreiben eines Bussystems, insbesondere eines CAN-Busses, beschrieben. An das Bussystem sind mehrere Stationen anschließbar. Eine übertragene Nachricht weist eine Kennung auf, wobei eine bestimmte Kennung immer nur von einer einzigen Station verwendet werden darf. Jede der Stationen vergleicht die Kennung einer übertragenen Nachricht mit den von ihr selbst verwendeten Kennungen. Bei einer Übereinstimmung wird eine Fehlermeldung erzeugt.

### Offenbarung der Erfindung

Die Erfindung stellt ein Verfahren zum Abwehren einer Manipulation an einem CAN-Bus durch einen mittels eines CAN-Controllers an den Bus angebundenen ersten Knoten, eine entsprechende Vorrichtung, ein entsprechendes Computerprogramm sowie ein entsprechendes Speichermedium gemäß den unabhängigen Ansprüchen bereit.

Das beschriebene Verfahren beruht auf der Erkenntnis, dass jeder Bus-Teilnehmer nur die zugeordneten Botschaftskennungen verwendet und damit empfangene Botschaften eindeutig über die Botschaftskennungen dem Absender zugeordnet werden können.

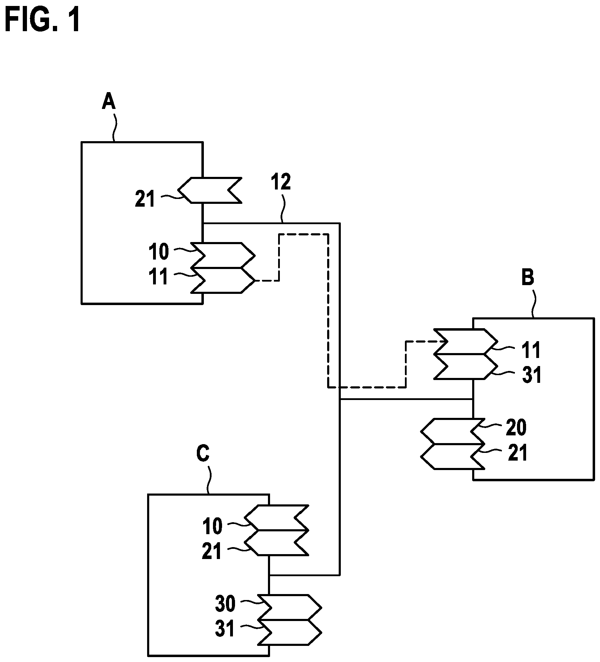

Im Beispiel der Figur 1 wurden Busteilnehmer A die Botschaften mit den Kennungen 10 und 11 zugeordnet, Teilnehmer B jene mit den Kennungen 20 und 21 und Teilnehmer jene mit den Kennungen 30 und 31. Wenn Teilnehmer B die Botschaft 11 korrekt empfängt, geht Teilnehmer B davon aus, dass die Botschaft 11 von Teilnehmer A versendet wird.

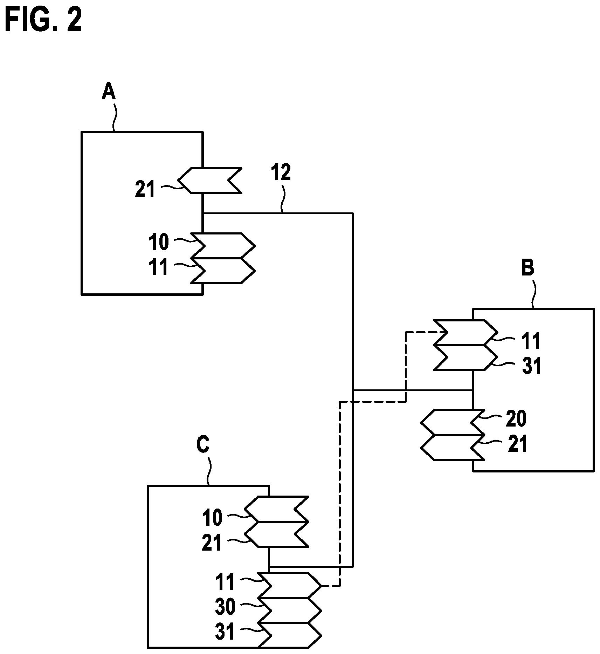

Damit ist ein Bus-Empfänger nicht in der Lage, festzustellen, von wem die Botschaft tatsächlich versendet wurde. Ein Angreifer kann einen Busteilnehmer so kompromittieren, dass er in der Lage ist, Botschaften anderer Teilnehmer am Bus zu versenden und damit die Kommunikation oder die Funktion eines oder mehrerer Busteilnehmer zu stören. In Figur 2 wurde Busteilnehmer C kompromittiert und sendet jetzt auch die Botschaft 11 von Knoten A. Knoten B kann nicht ohne Weiteres erkennen, dass Botschaft 11 von Knoten C anstelle Knoten A versendet wurde. Da es sich bei dem CAN-Bus um einen zwischen allen Kommunikationsteilnehmern geteilten Kommunikationskanal handelt, sind unter der Voraussetzung eines physikalischen Zugriffs auf den Kommunikationskanal analoge Angriffe durch eine Integration zusätzlicher Kommunikationsteilnehmer denkbar.

Ein Vorzug des vorgeschlagenen Verfahrens liegt darin, dass die Sender von Botschaften die Kommunikation auf dem Bus beobachten und bei erkanntem Fehler - z. B. ein anderer Busteilnehmer sendet gerade eine Botschaftskennung des überwachten Senders - ggf. mittels eines abgesicherten Sendemoduls die entsprechende Botschaft ungültig machen kann.

Das beschriebene Verfahren kann auch dazu verwendet werden, um gewisse CAN-Netzwerkauslegungen - etwa Botschaftshäufigkeiten und Botschafts-Zeitabstände auch anderer Bus-Teilnehmer - zu überwachen, um bei Auffälligkeiten ggf. mit entsprechenden Fehlerreaktionen das Kommunikationsnetz in einen sicheren Zustand zu versetzen.

Dieses Vorgehen kann insbesondere in Verbindung mit einem Hardwaresicherheitsmodul (*hardware security module,* HSM) auch für die Überwachung der knoteneigenen Sendebotschaften der normalen Anwendungssoftware (ASW) mit Standard-CAN-Knoten verwendet werden.

Der Vorteil dieses Verfahrens liegt ferner darin, dass das Sendemodul mit den zu überwachenden CAN-Botschaftskennungen (z. B. durch das HSM) initialisiert werden kann. Wahlweise kann das Sendemodul bei einer erkannten "unzulässigen" Botschaft eine vordefinierte Fehlerreaktion auslösen. Durch das zusätzliche Sendemodul bedarf es keiner Änderungen standardkonformer CAN-Module, wie sie etwa von der Robert Bosch GmbH unter dem Handelsnamen "M_CAN" vertrieben werden.

Durch die in den abhängigen Ansprüchen aufgeführten Maßnahmen sind vorteilhafte Weiterbildungen und Verbesserungen des im unabhängigen Anspruch angegebenen Grundgedankens möglich. So kann vorgesehen sein, dass auf dem Bus ein Fehlerrahmen generiert wird, während die unzulässige Botschaft gesendet wird. Dies ist nicht konform zur CAN-Protokoll-Spezifikation, aber es ist kompatibel zum CAN-Protokoll; es entspricht der Reaktion auf einen erkannten Übertragungsfehler. Die anderen Botschaftskonsumenten können z. B. mit entsprechenden Ersatzreaktionen auf die ausbleibenden Botschaften reagieren.

### Kurze Beschreibung der Zeichnungen

Ausführungsbeispiele der Erfindung sind in den Zeichnungen dargestellt und in der nachfolgenden Beschreibung näher erläutert. Es zeigt:
Figur 4 das Blockdiagramm eines normalen Sendevorgangs.
Figur 5 das Blockdiagramm eines unzulässigen Sendevorgangs.
Figur 6 das Verfahren gemäß einer Ausführungsform der Erfindung zur Abwehr der Manipulation.

### Ausführungsformen der Erfindung

Das Verfahren sieht vor, dass Busteilnehmer mit einem entsprechend abgesicherten Hardware-Modul (HW-Modul) ausgestattet sind, das in der Lage ist, die Buskommunikation zu beobachten. Dieses Sendemodul kann durch ein HSM oder eine anderweitige Steuereinheit angebunden und verwaltet werden. Im Normalbetrieb wird das Modul mit den Botschaftskennungen initialisiert, die von diesem Busknoten versendet werden sollen. In einer Alternative kann das CAN-HW-Modul dazu ausgeprägt sein, dass es von einer vertrauenswürdigen Steuereinheit - bspw. dem HSM - Regeln bzgl. der vorgesehenen busknoteneigenen Kommunikation entgegennimmt, bspw. die Periodizität von Nachrichten oder maximale Anzahl einer bestimmten Nachricht pro Zeiteinheit.

Das CAN-HW-Modul erkennt die normalen Sendevorgänge des Standard-CAN-Controllers und kann damit ggf. die zyklische Aktivität des Busknotens überwachen. Die Sendevorgänge des eigenen Busknotens werden als gültig erkannt - weitere Maßnahmen sind nicht notwendig.

In dem Fall, dass ein Busteilnehmer - z. B. ein Gateway - kompromittiert wird oder einen Fehlerzustand einnimmt, sodass dieser Knoten unzulässige Botschaften, die nicht mit den im HW-Modul konfigurierten Botschaften übereinstimmen, sendet oder die definierten Kommunikationsregeln für die durch den Busteilnehmer zu sendenden Nachrichten nicht einhält, kann dies durch das HW-Modul dieses Knotens erkannt werden und mindestens eine der folgenden Gegenmaßnahmen einleiten:
5. Das Sendemodul generiert bei laufender Übertragung der unzulässigen Botschaft einen Fehlerrahmen (*error frame*) und macht damit die unzulässige Botschaft ungültig.
6. Das Sendemodul meldet über andere Kommunikationskanäle - z. B. andere CAN-Botschaften - die unzulässige Botschaft an die Botschaftskonsumenten.
7. Das Steuergerät (SG) generiert einen Bus-Off-Fehlerzustand und versetzt die restlichen Busteilnehmer in einen sichereren Zustand, z. B. einen kontrollierten Notfallbetrieb.
8. Das Sendemodul verhindert, bspw. mittels eines Hardwareeingriffs, dass weitere CAN-Botschaften gesendet werden können, bspw. durch Trennen der Sendeleitung (*transmit,* Tx) zwischen CAN-Controller und CAN-Sendeempfänger (*transceiver*).

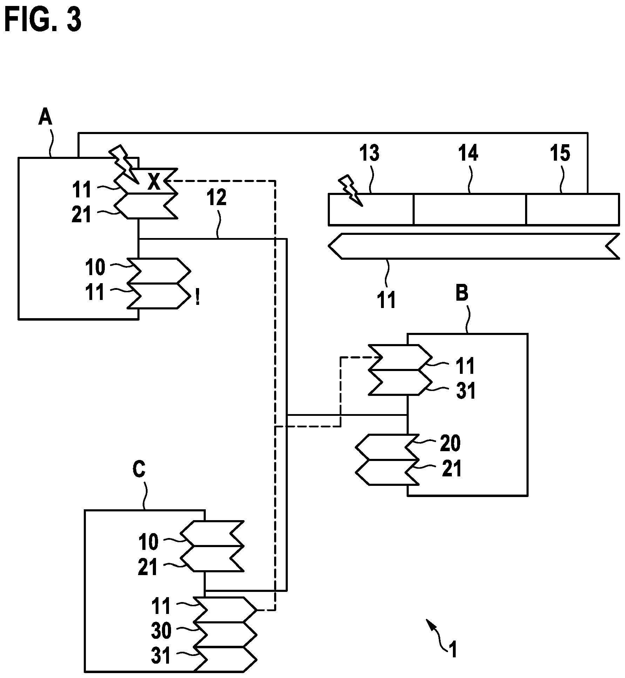

In dem Fall, dass ein Knoten - bspw. ein kompromittierter Knoten C oder auch ein zusätzlich in das Netzwerk integrierter Knoten - Botschaften sendet - vorliegend die aus Arbitrierungsfeld 13, Daten 14 und Rahmenende (*end of frame,* EOF) 15 zusammengesetzte Botschaft 11 -, die eigentlich exklusiv einem anderen Knoten (bspw. Knoten A) zugeordnet sind, können diese durch den Originalsender (Knoten A) erkannt und entsprechende Ersatz- oder Fehlerreaktionen ausgelöst werden (vgl. Figur 3):
4. Das Sendemodul generiert bei laufender Übertragung der unzulässigen Botschaft einen Fehlerrahmen (*error frame*) und macht damit die unzulässige Botschaft ungültig.
5. Das Sendemodul meldet über andere Kommunikationskanäle - z. B. andere CAN-Botschaften - die unzulässige Botschaft an die Botschaftskonsumenten.
6. Das Steuergerät (SG) generiert einen Bus-Off-Fehlerzustand und versetzt die restlichen Busteilnehmer in einen sichereren Zustand, z. B. einen kontrollierten Notfallbetrieb.

Ist das Sendemodul eines Knotens A dazu ausgebildet, Kommunikationsregeln (bspw. die Periodizität von Nachrichten oder maximale Anzahl einer bestimmten Nachricht pro Zeiteinheit) anderer Kommunikationsteilnehmer zu überwachen, dann kann das Sendemodul des Knotens A feststellen, dass ein anderer Kommunikationsknoten (bspw. Knoten B) diese Regeln verletzt und entsprechende Ersatz- oder Fehlerreaktionen auslösen:
4. Das Sendemodul generiert bei laufender Übertragung der unzulässigen Botschaft einen Fehlerrahmen (*error frame*) und macht damit die unzulässige Botschaft ungültig.
5. Das Sendemodul meldet über andere Kommunikationskanäle - z. B. andere CAN-Botschaften - die unzulässige Botschaft an die Botschaftskonsumenten.
6. Das Steuergerät (SG) generiert einen Bus-Off-Fehlerzustand und versetzt die restlichen Busteilnehmer in einen sichereren Zustand, z. B. einen kontrollierten Notfallbetrieb.

Wenn mehrere CAN-Module (z. B. des Typs M_CAN), aber nur ein Sendemodul auf einem Controller integriert sind, kann das Sendemodul per Hardwaremultiplexer auf jeweils ein CAN-Modul zyklisch umgeschaltet und der dazugehörige CAN-Bus gescannt werden.

## Patentansprüche

1. Verfahren (1) zum Abwehren einer Manipulation an einem CAN-Bus (12) durch einen mittels eines CAN-Controllers an den Bus (12) angebundenen ersten Knoten (A),
umfassend folgende Schritte:
- ein abgesichertes Sendemodul des ersten Knotens (A) überwacht den Bus (12),
- das Sendemodul erkennt eine abweichend von einem Normalbetrieb unzulässiger Weise auf dem Bus (12) gesendete Botschaft (10, 11, 20, 21, 30, 31), und
- falls das Sendemodul die Botschaft (10, 11, 20, 21, 30, 31) erkennt, leitet das Sendemodul gegen die Manipulation vorgesehene Gegenmaßnahmen ein, **gekennzeichnet durch** folgende Merkmale:
- der CAN-Controller nimmt von einer vertrauenswürdigen Steuereinheit, insbesondere einem Hardwaresicherheitsmodul, vorgegebene Regeln für Sendevorgänge entgegen,
- das Sendemodul erkennt anhand der Regeln die Sendevorgänge des CAN-Controllers im Normalbetrieb des ersten Knotens (A),
- ein an den Bus (12) angebundener zweiter Knoten (B) sendet die Botschaft (10, 11, 20, 21, 30, 31) und
- die Botschaft (10, 11, 20, 21, 30, 31) wird anhand der Regeln erkannt.

2. Verfahren (1) nach Anspruch 1,
**gekennzeichnet durch** folgendes Merkmal:
- die Gegenmaßnahmen umfassen, dass auf dem Bus (12) ein Fehlerrahmen generiert wird, während die Botschaft (10, 11, 20, 21, 30, 31) gesendet wird.

3. Verfahren (1) nach Anspruch 1 oder 2,
**gekennzeichnet durch** folgendes Merkmal:
- die Gegenmaßnahmen umfassen, dass die Botschaft (10, 11, 20, 21, 30, 31) über andere Kommunikationskanäle gemeldet wird.

4. Verfahren (1) nach einem der Ansprüche 1 bis 3,
**gekennzeichnet durch** folgendes Merkmal:
- die Gegenmaßnahmen umfassen, dass der Bus (12) in einen Fehlerzustand versetzt wird.

5. Verfahren (1) nach einem der Ansprüche 1 bis 4,
**gekennzeichnet durch** folgende Merkmale:
- in dem Normalbetrieb wird das Sendemodul mit zulässigen Botschaftskennungen des ersten Knotens (A) initialisiert,
- der erste Knoten (A) sendet die Botschaft (10, 11, 20, 21, 30, 31),
- die Botschaft (10, 11, 20, 21, 30, 31) wird anhand der Botschaftskennungen erkannt und
- die Gegenmaßnahmen umfassen, dass weitere Sendevorgänge insbesondere mittels eines Hardwareeingriffs in den CAN-Controller unterbunden werden.

6. Computerprogramm, welches eingerichtet ist, das Verfahren (1) nach einem der Ansprüche 1 bis 5 auszuführen.

7. Maschinenlesbares Speichermedium, auf dem das Computerprogramm nach Anspruch 6 gespeichert ist.

8. Vorrichtung, die eingerichtet ist, alle Verfahrensschritte des Verfahrens (1) nach einem der Ansprüche 1 bis 5 auszuführen.

## Claims

1. Method (1) for warding off manipulation of a CAN bus (12) by means of a first node (A) connected to the bus (12) by means of a CAN controller,
comprising the following steps:
- a secure transmission module of the first node (A) monitors the bus (12),
- the transmission module detects a message (10, 11, 20, 21, 30, 31) transmitted in an impermissible manner on the bus (12) in a manner deviating from normal operation, and
- if the transmission module detects the message (10, 11, 20, 21, 30, 31), the transmission module initiates countermeasures provided against manipulation,
**characterized by** the following features:
- the CAN controller receives predefined rules for transmission operations from a trusted control unit, in particular a hardware security module,
- the transmission module detects the transmission operations of the CAN controller during normal operation of the first node (A) on the basis of the rules,
- a second node (B) connected to the bus (12) transmits the message (10, 11, 20, 21, 30, 31), and
- the message (10, 11, 20, 21, 30, 31) is detected on the basis of the rules.

2. Method (1) according to Claim 1,
**characterized by** the following feature:
- the countermeasures comprise the fact that an error frame is generated on the bus (12) while the message (10, 11, 20, 21, 30, 31) is transmitted.

3. Method (1) according to Claim 1 or 2,
**characterized by** the following feature:
- the countermeasures comprise the fact that the message (10, 11, 20, 21, 30, 31) is reported via other communication channels.

4. Method (1) according to one of Claims 1 to 3,
**characterized by** the following feature:
- the countermeasures comprise the fact that the bus (12) is changed to an error state.

5. Method (1) according to one of Claims 1 to 4,
**characterized by** the following features:
- during normal operation, the transmission module is initialized with permissible message identifiers of the first node (A),
- the first node (A) transmits the message (10, 11, 20, 21, 30, 31),
- the message (10, 11, 20, 21, 30, 31) is detected on the basis of the message identifiers, and
- the countermeasures comprise the fact that further transmission operations are prevented, in particular by means of hardware intervention in the CAN controller.

6. Computer program which is set up to carry out the method (1) according to one of Claims 1 to 5.

7. Machine-readable storage medium which stores the computer program according to Claim 6.

8. Apparatus which is set up to carry out all method steps of the method (1) according to one of Claims 1 to 5.

## Revendications

1. Procédé (1) destiné à empêcher une manipulation au niveau d'un bus CAN (12) par un premier noeud (A) relié au bus (12) au moyen d'un contrôleur CAN, le procédé comprenant les étapes suivantes :
- un module d'émission sécurisé du premier noeud (A) surveille le bus (12),
- le module d'émission détecte un message (10, 11, 20, 21, 30, 31) envoyé sur le bus (12) en s'écartant du fonctionnement normal de manière non admissible, et
- si le module d'émission détecte le message (10, 11, 20, 21, 30, 31), le module d'émission déclenche des contre-mesures prévues contre la manipulation,
**caractérisé par** les caractéristiques suivantes :
- le contrôleur CAN reçoit des règles prescrites par une unité de commande digne de confiance, en particulier un module de sécurité matériel, et destinées à des processus d'émission,
- le module d'émission utilise les règles pour détecter les processus d'émission du contrôleur CAN pendant le fonctionnement normal du premier noeud (A),
- un deuxième noeud (B) relié au bus (12) envoie le message (10, 11, 20, 21, 30, 31) et
- le message (10, 11, 20, 21, 30, 31) est détecté sur la base des règles.

2. Procédé (1) selon la revendication 1, **caractérisé par** la caractéristique suivante :
- les contre-mesures comprennent la génération d'une trame d'erreur sur le bus (12) lors de l'envoi du message (10, 11, 20, 21, 30, 31).

3. Procédé (1) selon la revendication 1 ou 2, **caractérisé par** la caractéristique suivante :
- les contre-mesures comprennent le signalement du message (10, 11, 20, 21, 30, 31) par le biais d'autres canaux de communication.

4. Procédé (1) selon l'une des revendications 1 à 3, **caractérisé par** la caractéristique suivante :
- les contre-mesures comprennent le placement du bus (12) dans un état d'erreur.

5. Procédé (1) selon l'une des revendications 1 à 4, **caractérisé par** les caractéristiques suivantes:
- en fonctionnement normal, le module d'émission est initialisé avec des identifiants de message admissibles du premier noeud (A),
- le premier noeud (A) envoie le message (10, 11, 20, 21, 30, 31),
- le message (10, 11, 20, 21, 30, 31) est détecté sur la base des identifiants de message et
- les contre-mesures comprennent l'empêchement de processus d'émission ultérieurs par une intervention matérielle dans le contrôleur CAN.

6. Logiciel conçu pour mettre en oeuvre le procédé (1) selon l'une des revendications 1 à 5.

7. Support de stockage, lisible par machine, sur lequel est stocké le logiciel selon la revendication 6.

8. Dispositif conçu pour effectuer toutes les étapes du procédé (1) selon l'une des revendications 1 à 5.
